# FASCICULE DE BREVET EUROPEEN

(11) **EP 1 933 561 B1**
(45) Date de publication et mention de la délivrance du brevet: **10.06.2009**
(21) Numéro de dépôt: 07024169.0
(22) Date de dépôt: 13.12.2007
(51) Int. Cl.: H04N 7/24, H04N 5/00, H04N 5/44, H04H 60/72

(54) **Procédé de diffusion de données au sein d'un terminal de réception et terminal implémentant le procédé**
Verfahren zur Datenverteilung innerhalb eines Empfangsendgeräts und Empfangsendgerät, bei dem dieses Verfahren umgesetzt wird
Method for distributing data in a reception terminal and terminal implementing the method

(30) Priorité: 13.12.2006 FR 0610884
(43) Date de publication de la demande: 18.06.2008
(73) Titulaire: SAGEM MOBILES, 75015 Paris (FR)
(72) Inventeur: Pecqueur Rémi, 92800 Puteaux (FR)
(74) Mandataire: Maillet, Alain

(56) Documents cités:
- EP-A1- 1 025 698
- WO-A-20/06090225
- US-A1- 2003 056 224
- US-A1- 2006 053 450
- ETSI: "IP Datacast over DVB-H: Content Delivery Protocols" ETSI DVB EBU, [Online] no. 102472, 1 décembre 2006 (2006-12-01), pages 1-76, XP002444556 Extrait de l'Internet: URL:http://www.dvb-h.org/pdf/ts_102472v010 201p.pdf> [extrait le 2007-07-26]
- DVB DIGITAL VIDEO BROADCASTING: "IP Datacast over DVB-H: Electronic Service Guide" DIGITAL VIDEO BROADCASTING, XX, XX, septembre 2005 (2005-09), pages 1-95, XP002393945
- NOKIA: "FLUTE for MBMS downloading" 3GPP TSG SA4#29 MEETING, XX, XX, no. tdoc s4-30772, 8 novembre 2003 (2003-11-08), pages 1-10, XP002365309

## Description

### Domaine technique

L'invention se situe dans le domaine des terminaux de réception de services multimédias notamment selon la norme DVB-H. Ces terminaux peuvent être mobiles. L'invention concerne plus particulièrement la gestion dans un tel terminal du guide des services disponibles et sa mise à jour.

### Art antérieur

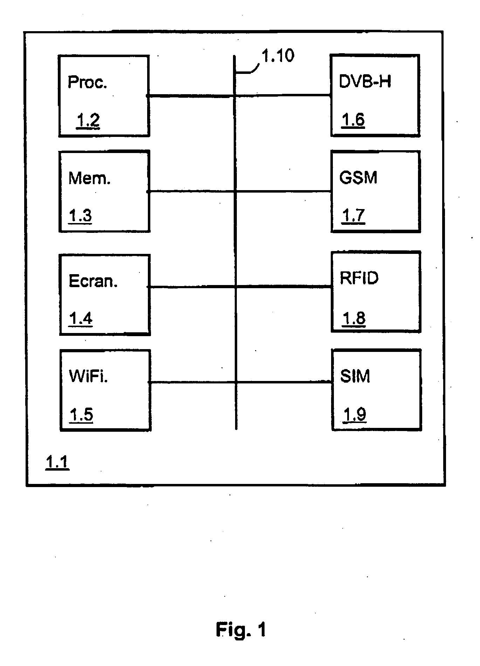

Dans le cadre de la convergence entre la diffusion de contenus multimédias et les télécommunications, un nouveau type de terminal apparaît. Ces terminaux sont capables de communiquer en utilisant les différents réseaux de communication actuels, notamment les réseaux de communication sans fil. Parmi ceux-ci, on peut citer les réseaux de téléphonie mobile basés sur les normes GSM (*Global System for Mobile Communication* en anglais), UMTS (*Universal Mobile Telecommunications System* en anglais) ou autres, ainsi que les réseaux de communication sans fil informatiques comme le WiFi basé sur la famille de normes 802.11, le Bluetooth ou autres. Ces terminaux sont également capables de recevoir des services diffusés, comme des services télévisuels, par exemple, suivant la norme DVB-H (*Digital Video Broadcast handheld* en anglais). Ces services peuvent être diffusés par satellite ou bien encore par la voie hertzienne. La Fig. 1 représente un exemple d'un tel terminal 1.1. Il se compose, dans l'exemple représenté, d'un module de réception de services diffusés référencé 1.6. Ce module 1.6 permet donc au terminal de recevoir et de décoder des services diffusés comme, par exemple, des chaînes de télévision ou des applications interactives. Le terminal comporte également un module de réception de téléphonie mobile référencé 1.7. Ce module 1.7 permet d'utiliser le terminal comme téléphone mobile et fournit également un canal de communication bidirectionnel permettant l'échange de données entre le terminal et des serveurs connectés au réseau téléphonique mobile. Le terminal comporte également un module de lecture d'identificateur RFID (*Radio Frequency identification* en anglais), référencé 1.8. Ce module 1.8 permet au terminal de lire des marqueurs RFID lorsqu'il est placé à proximité de tels marqueurs. Ces marqueurs peuvent être placés dans certains environnements et dotés, par exemple, d'informations relatives à des services disponibles pour le terminal dans cet environnement. Le terminal comporte également un module, référencé 1.9, de lecture de carte à puce appelé carte SIM. Ce module permet d'insérer dans le terminal une carte à puce dotée d'informations pouvant être relatives aux paramètres liés aux abonnements souscrits par le propriétaire du terminal. Cette carte, généralement attribuée par l'opérateur, peut également contenir des informations sur des services spécifiques offerts par celui-ci à ses abonnés. Le terminal contient également un module WiFi, référencé 1.5, qui permet l'accès à des réseaux de communication numériques comme le réseau Internet et, par ce biais, aux multiples services disponibles sur ce réseau. L'accès WiFi étant généralement fourni par l'intermédiaire d'une passerelle d'accès se trouvant au domicile, ce module peut également donner accès à des services ou des médias que l'utilisateur peut avoir stockés sur des appareils connectés à son réseau local comme son ordinateur. Le terminal dispose également d'un écran, référencé 1.4, qui permet la restitution des services. Son fonctionnement se fait sous le contrôle d'un processeur central, référencé 1.2, qui permet d'exécuter des programmes stockés dans la mémoire 1.3.

L'augmentation récente des demandes pour l'accès à la télévision numérique a amené la communauté scientifique à développer un système de diffusion hertzien de télévision numérique : le système DVB-T (*Digital Video Broadcasting Terrestrial* : télévision numérique terrestre). Le système DVB-T, défini, entre autres, par les standards ETSI EN 300 744 « *Digital Video Broadcasting (DVB) ; Framing structure, channel coding and modulation for digital terrestrial television. (DVB-T)* », ETSI EN 300 468 « *Digital Video Broadcasting (DVB) ; Specification for Service Information (SI) in DVB systems. DVB-SI* », est une technologie qui consiste à transmettre des flux de données numériques, telles que des données audio-visuelles de type télévision, qui peuvent être associées à des données numériques interactives du même type que celui qui est transmis par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières, d'accéder à ce type de flux de services. Cette adaptation a donné lieu au système normalisé dit DVB-H (*Digital Video Broadcast-Handheld*) défini par le standard ETSI EN 302 304 : *Digital Video Broadcasting (DVB) ; Transmission System for Handheld Terminals (DVB-H).* Cette norme vise à permettre la diffusion de flux de services multimédias sur des terminaux mobiles qui, comme les téléphones mobiles, doivent répondre à des exigences spécifiques en termes de consommation de courant, de taille d'écran et de mobilité. Selon la norme DVB-H, les services transportés au sein d'un flux sont codés et multiplexés sur la base de la technologie MPEG-2 (*Moving Picture Experts Group* en anglais) système, standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

*IP Datacast* (IPDC) sur DVB-H est un système de bout en bout qui permet de délivrer tout type de contenu numérique et tout service en utilisant des mécanismes basés sur IP (*Internet protocol* en anglais). Ces mécanismes sont adaptés aux terminaux possédant des limitations, tant en capacités de calcul qu'en énergie. De manière inhérente, le système IPDC comprend une voie unidirectionnelle de diffusion DVB combinée avec une voie interactive bidirectionnelle de communication mobile. IPDC est donc une plate-forme qui peut être utilisée pour mettre en place la convergence de services entre la diffusion de services et le domaine des télécommunications.

La norme DVB définit un guide électronique de services appelé ESG (*Electronic Service Guide* en anglais). Ce guide électronique de services contient des informations relatives aux services disponibles. En utilisant les données de l'ESG, le terminal est capable d'offrir ces services à l'utilisateur qui peut sélectionner ceux qui l'intéressent. L'ESG est constitué d'une structure arborescente de fragments ou méta données XML de services qui sont disponibles sur le canal DVB-H, le ou les canaux interactifs et autres. Pour chaque service, l'ESG contient un ensemble de fragments qui peuvent contenir un ensemble d'informations relatives à ce service, dans un contexte bien particulier, la description d'un service complet se faisant en juxtaposant les informations de plusieurs fragments (par exemple, un service est constitué d'un fragment de description de service, d'un fragment d'achat et d'un fragment de description du contenu). Parmi ces informations, on trouve, entre autres, des informations de localisation permettant de localiser dans le système IPDC le service, des informations relatives à la programmation de ce service comme son horaire de diffusion, le type des médias dont est constitué le service. Ces fragments peuvent également contenir, sous la forme de métadonnées, toutes sortes de données numériques complémentaires, comme des images de logos, des fichiers de sons ou autres.

L'acquisition de l'ESG par le terminal se fait par téléchargement au moyen du mécanisme IPDC. Les données de l'ESG sont divisées en fragments dotés d'un numéro de version. Ces fragments sont diffusés au sein d'une session IPDC selon un mode dit carrousel, c'est-à-dire que les fragments sont envoyés les uns après les autres et de manière cyclique. De cette façon, un terminal souhaitant acquérir l'ESG se connecte sur cette session et commence à charger les fragments diffusés. Du fait de la diffusion cyclique, il finit par acquérir tous les segments composant l'ESG ce qui lui permet de reconstituer en mémoire un ESG dit de travail constitué à partir de tous les fragments acquis. Le terminal reste à l'écoute de ce canal pour être informé des mises à jour. Cette écoute n'est pas obligatoirement permanente mais peut, par exemple, n'avoir lieu que pendant la réception par le terminal d'un programme TV. Cette façon de faire permet d'économiser l'énergie utilisée pour la mise à jour du guide de services. Dans ce contexte, l'ESG n'est pas toujours l'image exacte et à jour de l'ESG diffusé. On considère donc l'ESG de travail comme une image proche de l'ESG diffusé à un instant t.

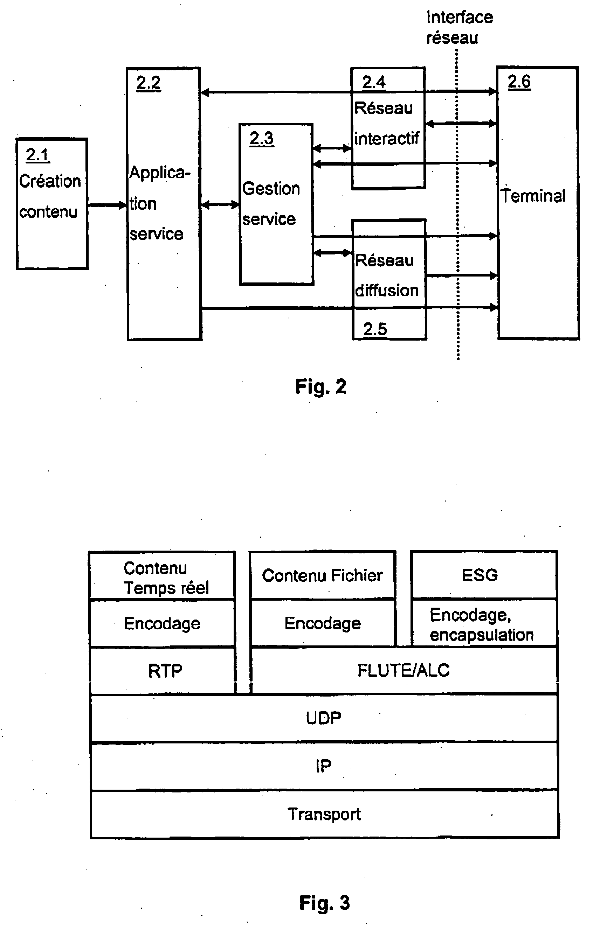

La Fig. 2 représente l'architecture de référence du mécanisme de diffusion de données connu sous le nom de « datacast » IP. Le cadre 2.1 représente la création du contenu qui doit être délivré au terminal 2.6. De façon à permettre une vraie convergence de réseau, il doit être possible de diffuser le contenu via plusieurs réseaux de communication différents. Ces réseaux peuvent être un réseau de diffusion 2.5 de type DVB-H diffusant du contenu DVB via le réseau hertzien à destination de terminaux mobiles ou encore un réseau de téléphonie mobile 2.4. Ce réseau de téléphonie est dit interactif car il est bidirectionnel contrairement au réseau de diffusion qui lui ne permet le transfert de données que du créateur de contenu vers le terminal. Pour gérer cette diversité des réseaux de transport, il est introduit une application de service 2.2 qui fournit un lien logique entre le fournisseur de contenu et le terminal Cette application de service offre un guide électronique de service à l'utilisateur qui peut sélectionner les services qu'il désire consulter indépendamment du réseau de transport servant à leur diffusion. Le gestionnaire de services 2.3 est chargé d'allouer les ressources nécessaires sur les différents réseaux de transport. Il peut également se charger de la facturation des services en collaboration avec l'application de service.

La Fig. 3 représente l'architecture logicielle simplifiée du datacast IP. Au-dessus des couches de transport physiques, est implémenté le protocole IP (Internet Protocol). Au-dessus d'IP, se trouve la couche UDP (User Datagram Protocol). UDP offre un service minimal permettant de délivrer des paquets de données IP d'une source vers une destination. Il permet également la diffusion de paquets émis par une source vers une multitude de destinataires (multicast en anglais). C'est un protocole simple mais qui ne contient pas de mécanisme assurant qu'un paquet émis arrive à destination. Sa simplicité et sa rapidité le rendent particulièrement bien adapté à la diffusion de données en temps réel. D'autre part, il n'implique pas, au contraire de TCP (Transmission Control Protocol), d'échanges d'acquittements entre la destination et la source. Cette propriété le rend bien adapté aux réseaux de diffusion monodirectionnels. Au-dessus de ces trois couches vont être implémentés différents protocoles de diffusion de données en fonction du type de données. Pour les données de type temps réels comme la vidéo ou l'audio d'un service, ces données sont encodées puis diffusées via le protocole RTP.

En ce qui concerne la diffusion de données de type fichiers comme par exemple des mises à jour logicielles à destination du terminal, les protocoles FLUTE/ALC (File Delivery over Unidirectional Transport / Asynchronous Layered Coding), définis dans les RFC (Request For Comments) numérotées 3926 et 3450, sont utilisés. Ces protocoles offrent la possibilité de créer des sessions permettant la diffusion de gros fichiers de données entre une source et une multitude de destinations. Ces protocoles sont basés sur la diffusion IP multipoint (multicast en anglais). Pour l'application de diffusion de fichiers, le simple transfert d'objet n'est pas suffisant. FLUTE apporte un mécanisme de signalisation permettant de faire correspondre des propriétés de fichiers aux concepts de ALC d'une façon qui permet au receveur d'assigner ces propriétés aux objets reçus. ALC, quant à lui, fournit un protocole de diffusion de données robuste massivement dimensionnable. Cette notion de massivement dimensionnable, dans ce contexte, signifie que le nombre de récepteurs simultanés de la diffusion peut s'échelonner de l'unité à plusieurs millions et que la taille des objets diffusés peut s'échelonner de quelques kilo-octets à plusieurs centaines de giga-octets, chaque récepteur pouvant initier la réception d'un objet de manière asynchrone.

Pour pouvoir recevoir une session FLUTE/ALC, un récepteur doit connaître les paramètres de transport associés à cette session. Ces paramètres nécessaires à la réception d'une session sont les suivants :
■ l'adresse source IP,
■ le nombre de canaux dans la session,
■ l'adresse de destination et le port pour chaque canal de la session,
■ l'identifiant de session de transport (TSI) associé à la session.

Comme la liste des services disponibles est en perpétuelle évolution, les données de l'ESG sont modifiées. Cela se traduit au niveau du transport par des modifications de certains segments. Lorsqu'un segment est modifié, son numéro de version change. De cette façon, le terminal peut, une fois qu'il a acquis l'intégralité de l'ESG, par une écoute du canal de diffusion des fragments de l'ESG, surveiller les numéros de version des fragments diffusés pour n'acquérir que les fragments dont le numéro a changé. De cette manière, il peut mettre à jour sa version de travail de l'ESG tout en n'acquérant que les fragments qui ont été modifiés. Cette méthode nécessite toutefois une écoute constante du canal de diffusion de l'ESG. Le canal de diffusion est compris ici comme la session IPDC de diffusion de cet ESG. Le nombre de services et la quantité d'informations relatives à ces services offerts par l'intermédiaire de l'ESG font que celui-ci tend à devenir de plus en plus lourd en termes de quantité de données. De ce fait, son acquisition et sa mise à jour sont des processus gourmands en temps et en énergie.

Les terminaux de restitution de ces services peuvent se connecter à toujours plus de canaux de communication. Ils se dotent aujourd'hui, en sus des moyens de réception de services diffusés et des moyens de communication liés à la téléphonie mobile, de nouveaux canaux de communication, comme le WiFi, le RFID ou encore bientôt le WiMAX, une évolution du WiFi améliorant la portée et le débit de celui-ci basée sur le protocole 842.16 de l'IEEE.

Dans ce cadre, la mise à jour de l'ESG se fait de la façon suivante. Les fragments d'ESG sont distribués via le mécanisme de distribution IPDC reposant sur l'envoi des fragments dans des sessions FLUTE. Cette diffusion prend place par le canal de diffusion DVB-H vu comme un canal unidirectionnel. De fait, le protocole FLUTE est adapté à la diffusion unidirectionnelle. Mais il est possible que certains fragments de l'ESG ne soient par reçus correctement. Dans ce cas, le terminal ne peut pas remonter d'erreurs par le canal de diffusion puisque celui-ci est unidirectionnel. Un mécanisme de récupération d'erreurs de diffusion de fragments d'ESG a donc été prévu. Ce mécanisme prévoit un mécanisme de récupération, dès lors que le terminal accède à un canal de communication interactif c'est-à-dire bidirectionnel, implémentant le protocole de communication IP (« Internet Protocol » en anglais). Dans ce cas, le terminal peut demander les fragments qu'il aurait mal reçus à un serveur de restauration sous la forme d'une requête HTTP (« Hyper Text Transport Protocol » en anglais). De fait, l'ESG est donc également disponible via un serveur HTTP, les fragments pouvant être demandés selon les besoins du terminal via HTTP. Ce mécanisme de récupération d'erreurs de diffusion de l'ESG par le canal de diffusion est décrit plus précisément dans le document « IP Datacast over DVB-H: Content Delivery Protocols (CDP)» sous la référence « TS 102 472 v1.1.1 » des normes de l'ETSI.

Un terminal conforme à la norme DVB-H possède donc deux moyens d'accéder à des fragments d'ESG de manière native, d'une part via le protocole FLUTE de diffusion unidirectionnelle sur un canal de diffusion, d'autre part via le protocole HTTP sur un canal interactif bidirectionnel. Nous avons vu que la ressource en périphérique d'un tel terminal tend à s'enrichir de multiples périphériques donnant accès à des supports de données variés tels que l'accès à des marqueurs RFID ou des cartes mémoires, des périphériques USB, entre autres. D'autre part, la diffusion de services DVB-H pouvant se faire de manières diverses et entre autres des diffusions locales pouvant être définies au niveau d'un centre commercial, d'un établissement d'enseignement ou de recherche, d'un terminal de transport comme une gare ou un aéroport, on voit apparaître le besoin de fournir à l'usager des informations de services accessibles de manière souple et ciblée. Pour ce faire, l'utilisation des divers périphériques du terminal pour fournir des fragments d'ESG au terminal devient un vecteur de choix.

### Exposé de l'invention

L'invention permet de fournir des fragments d'ESG à un terminal DVB-H sur divers supports accessibles au terminal sous la forme de périphériques. Ces supports comprennent, par exemple, des barres codes 2D, des marqueurs RFID, des cartes mémoires, des périphériques USB ou tout autre moyen de stockage. L'accès à ces fragments d'ESG fournis sur un support de stockage se fait au moyen d'un module s'interfaçant avec le pilote du périphérique et offrant à la couche applicative du terminal une interface présentant le périphérique sous la forme d'un canal de diffusion. De cette façon, le terminal est à même de se connecter à ce canal, d'ouvrir une session de diffusion et de recevoir les données disponibles sur le périphérique sous la forme d'une diffusion du type de la diffusion de fragments d'ESG via le canal de diffusion DVB-H.

De cette manière, par la simple adjonction de ce module au niveau des pilotes du terminal, il est possible de fournir des fragments d'ESG au terminal via de simples périphériques de stockage sans modification de sa couche applicative.

L'invention concerne un procédé de diffusion de données au sein d'un terminal de communication, ledit terminal étant apte à recevoir des données selon un protocole de diffusion de données par session, ledit protocole de diffusion de données par session étant implémenté sur un protocole de transport des données par paquets (4.16), ledit protocole de transport de données par paquets permettant la réception de paquets de données reçus par un canal de diffusion de données, comportant les étapes suivantes :
- (a) une étape d'ouverture de session par le terminal en vue de recevoir des donnés diffusées selon ledit protocole de diffusion de données par session,
- (b) une étape de lecture, par le terminal, des données diffusées via le protocole de diffusion de données par session via la session ouverte,
caractérisé en ce qu'il comporte en outre les étapes suivantes :
- (c) une étape de fourniture de données à diffuser stockées, sous la forme de données selon ledit format de diffusion par session, sur un moyen de stockage accessible au terminal,
- (d) une étape de lecture, par un module spécifique, des données sur le moyen de stockage,
- (e) une étape de fourniture, par ledit module spécifique, desdites données lues sur le support de stockage, au protocole de transport, sous la forme de paquets de données conformes au protocole de diffusion par session et correspondant à la session ouverte.

Selon un mode particulier de réalisation de l'invention, le procédé comporte en outre une étape d'envoi d'une notification contenant les informations permettant au terminal de connaître les paramètres permettant au moins l'ouverture d'une session correspondant aux données stockées sur le moyen de stockage.

Selon un mode particulier de réalisation de l'invention, les informations permettant au terminal de connaître les paramètres permettant l'ouverture de la session correspondant aux données stockées sur le moyen de stockage sont reçues via le canal de diffusion.

Selon un mode particulier de réalisation de l'invention, les étapes (c), (d) et (e) peuvent être répétées dans un mode dit de carrousel.

Selon un mode particulier de réalisation de l'invention, les données stockées sont des fragments de services de type guide électronique ou service de notification, ou encore des métadonnées audio/vidéo.

Selon un mode particulier de réalisation de l'invention, le procédé comporte en outre une étape d'envoi d'une notification de fin d'acquisition quand tous les paquets ont été émis.

L'invention concerne également un terminal de communication comprenant :
- un canal de diffusion,
- un protocole de transport de données par paquets permettant la réception de paquets de données reçus par ledit canal de diffusion de données,
- un protocole de diffusion de données par session, implémenté sur ledit protocole de transport des données par paquets,
- des moyens de réception de données selon ledit protocole de diffusion de données par session,
- des moyens d'ouverture de session par le terminal en vue de recevoir des données diffusées selon ledit protocole de diffusion de données par session,
- des moyens d'accéder à des données à diffuser stockées, sous la forme de données selon ledit format de diffusion par session, sur un moyen de stockage,
- des moyens de lecture, par un module spécifique, des données sur le moyen de stockage,
- des moyens de fourniture, par ledit module spécifique, desdites données lues sur le support de stockage, au protocole de transport, sous la forme de paquets de données conformes au protocole de diffusion par session.

L'invention concerne également un moyen de stockage pouvant être rendu accessible à un terminal de communication selon la revendication 6 caractérisé en ce qu'il comprend des données sous la forme de paquets de données conformes au protocole de diffusion par session.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente l'architecture générale matérielle d'un terminal selon un exemple de réalisation de l'invention.
La Fig. 2 représente l'architecture connue du mécanisme de « datacast IP ».
La Fig. 3 représente l'architecture logicielle connue du mécanisme de « datacast IP ».
La Fig. 4 représente l'architecture logicielle du terminal selon un exemple de réalisation de l'invention.
La Fig. 5 représente l'organigramme de fonctionnement d'un mode de réalisation de l'invention.

### Exposé détaillé de l'invention

L'invention vise à résoudre le problème consistant à permettre de fournir des fragments d'ESG à un terminal par le biais de périphériques de stockage au sens général du terme. Ces périphériques comprennent entre autres, des barres codes 2D dans le cadre d'un terminal doté d'une caméra, des marqueurs RFID dans le cas d'un terminal doté d'un lecteur RFID. Ils comprennent également des cartes de mémoire permettant d'augmenter la mémoire disponible dans un terminal, ces cartes de mémoire pouvant contenir des informations qui seront ainsi mises à disposition du terminal. Ils comprennent encore des périphériques USB (« Universal Serial Bus » en anglais) permettant de connecter des périphériques de stockage très courants comme les périphériques connus sous le terme courant de « clés USB ». Le mécanisme décrit peut s'étendre à tout type de stockage ou de périphériques de dialogue comme des périphériques WIFI ou Bluetooth connectables au terminal.

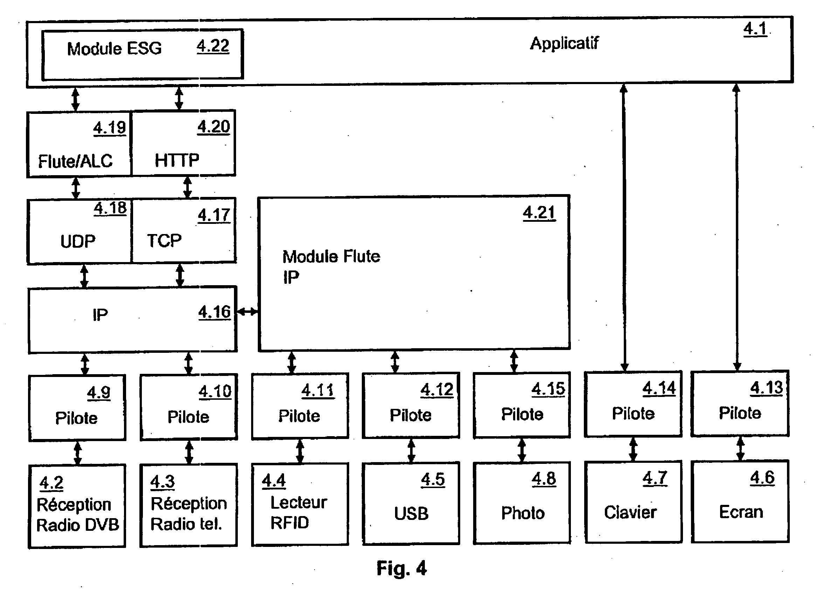

Il est avantageux d'apporter cette fonctionnalité en modifiant le moins possible le logiciel applicatif, référencé 4.1 sur l'exemple de réalisation illustré à la Fig. 4, gérant la fonctionnalité DVB-H du terminal et entre autres le module, référencé 4.22, gérant plus particulièrement le guide des services, son acquisition et sa mise à jour. En effet, cet applicatif est développé généralement de manière uniforme pour différents types de terminaux dotés de fonctionnalités diverses. Il est donc intéressant de garder, autant que faire se peut, un applicatif générique dépendant le moins possible des différences de matériel entre les différents terminaux sur lesquels il est amené à fonctionner.

Un terminal DVB-H est doté, au minimum, d'un accès à un canal de diffusion de services. Ce canal peut être un canal de réception satellite ou de réception hertzienne. Ce canal est généralement caractérisé par un mode de fonctionnement unidirectionnel La conformité à la norme DVB-H implique l'implémentation d'un mécanisme d'acquisition et de mise à jour du guide des services via le « datacast » IP que nous avons décrit. Sur la Fig. 4, ce canal est illustré par un module de réception radio hertzien 4.2, doté de ses pilotes 4.9. Une couche de transport 4.16, conforme au protocole IP, communique avec ces pilotes. Le protocole d'envoi de datagramme UDP, référencé 4.18, (« User Datagram Protocol » en anglais) est couché au-dessus de IP. Le mécanisme de session FLUTE/ALC, référencé 4.19, est couché au-dessus d'UDP. Le module de gestion d'ESG 4.22 au sein de l'applicatif 4.1 est alors à même d'ouvrir une session FLUTE pour acquérir selon la norme des fragments d'ESG via ce protocole FLUTE. La récupération d'un fragment d'ESG fourni par ce canal nécessite donc la connaissance de l'adresse IP de la source, du port utilisé et de l'identifiant de session FLUTE utilisée pour la diffusion de ce fragment.

La Fig. 4 illustre aussi l'existence d'un canal interactif bidirectionnel basé sur la fonctionnalité d'accès au réseau téléphonique sans fil. En effet, les dernières générations de téléphones sans fil supportent une connexion à débit raisonnable avec un réseau de communication de données comme Internet. Elles répondent à des normes telles GPRS (« General Packet Radio Service » en anglais) ou UMTS (« Universal Mobile Telecommunications System » en anglais). Ce canal est illustré par la partie radio dédiée à la réception dite télécom référencée 4.3, ses pilotes 4.10. La communication implémente également le protocole de communication IP 4.16 au-dessus duquel sont implémentés TCP 4.17, et HTTP 4.20. Le protocole HTTP est disponible pour la couche applicative 4.1 et en particulier le module de gestion de l'ESG 4.22. De cette manière, le mécanisme de récupération des fragments d'ESG mal reçus par le canal de diffusion peut être implémenté et les fragments manquants vont être récupérés via des requêtes HTTP utilisant le canal interactif. Ces requêtes seront dirigées vers un serveur interactif de récupération non représenté.

Un terminal classique, te que le terminal de l'exemple de réalisation, comporte également des composants matériels directement gérés par la couche applicative au travers de pilotes tels qu'un appareil photo 4.8 et son pilote 4.15, un clavier 4.7 et son pilote 4.14, un écran 4.6 et son pilote 4.13. Il peut également comporter des périphériques donnant, entre autres, accès à des moyens de stockage comme une interface USB 4.5 et son pilote 4.12 ou un lecteur RFID 4.4 et son pilote 4.11. Ces périphériques sont généralement directement gérés par la couche applicative pour diverses fonctions de communication et/ou de stockage. Il est par exemple possible de stocker les photos prises par l'appareil photo 4.8 sur une clé USB branchée via l'interface USB 4.5, ou encore d'utiliser celui-ci comme lecteur de codes barres 2D à même de fournir des données stockées sur un périphérique, en l'occurrence imprimées sous la forme de codes barres.

L'invention consiste principalement dans l'implémentation d'un module de diffusion FLUTE, référencé 4.21, au-dessus des pilotes d'au moins un périphérique donnant accès à des moyens de stockage. Dans l'exemple de réalisation, ce module est implémenté au-dessus du lecteur RFID 4.4 et de l'interface USB 4.5. La fonction générale de ce module est de simuler une diffusion via un canal de diffusion conforme au protocole FLUTE de données d'ESG présentes, de service de notification ou encore des métadonnées audio/vidéo, sur un moyen de stockage accessible via le périphérique au-dessus duquel il est implémenté. Le moyen de stockage comprend alors des fragments d'ESG au format utilisé lors d'une diffusion classique via le canal de diffusion. Le module lit alors ces données sur le moyen de stockage et compose des paquets de données IP contenant ces données au format FLUTE qui sont fournies à la couche IP 4.16 de façon identique aux paquets IP fournis par le canal de diffusion selon la norme de diffusion de contenu CDP (« Content Delivery Protocol » en anglais) définie par le document « IP Datacast over DVB-H: Content Delivery Protocols (CDP) » sous la référence « TS 102 472 v1.1.1 » de l'ETSI. De cette façon, le module de gestion d'ESG 4.22 peut accéder à une diffusion de fragments d'ESG via un moyen de stockage sans nécessiter de modification de la couche applicative. Dans un autre mode de cette description, les données stockées sur ledit support sont déjà formatées au format CDP (segments FLUTE). Les segments n'ont pas à être composés mais fournis directement à la couche IP 4.16 de façon identique aux paquets IP fournis par le canal de diffusion unidirectionnel (DVB-H).

De manière plus détaillée, chaque périphérique impliqué dans ce mécanisme est doté d'une adresse IP connue correspondant à l'adresse IP source du terminal. L'adresse de destination et son port peuvent, dans un premier mode, être une adresse multicast définie par la description de service dans l'ESG ou alors par la résolution d'adressage IP au niveau SI/PSI (appartenance à un domaine IPDC particulier et décrit comme étant l'adresse multicast ou unicast à utiliser). Si dans un second mode, une adresse unicast est utilisée, alors la résolution d'adressage s'effectue de la même manière que citée ci-dessus avec un changement du canal de distribution. Dans ce cas, le canal de distribution sera alors interactif, par exemple de type 3G ou Wi-Fi (802.11x). De manière optionnelle, l'adresse IP et le port de diffusion peuvent également être un paramètre fourni depuis le support de stockage. Les identificateurs de section sont présents dans les données stockées sur le support de stockage. Dans ce contexte, l'adresse IP sera alors cohérente avec les adresses IP appartenant au même domaine IPDC.

Il existe plusieurs façons pour que le module de gestion d'ESG apprenne la disponibilité d'un fragment d'ESG via un périphérique. Il est possible que les fragments d'ESG diffusés de manière classique via le canal de diffusion unidirectionnel fassent référence à la disponibilité de fragments ou services depuis les périphériques du terminal. Ce mode permet de récupérer les fragments en provenance d'un périphérique sans avoir à utiliser de protocoles de dialogue complexes. Une autre manière de faire est de générer une notification de mise à jour de l'ESG lors de l'insertion, par exemple, d'un support de stockage contenant des données d'ESG destinées à l'appareil. On peut aussi conditionner la génération de cette notification à une action de l'utilisateur. Celui-ci insère le support de stockage ou connecte son support USB, puis déclenche l'envoi de la notification via l'interface du terminal. Dans ce cas, la notification générée est composée à partir de données présentes sur le support et permet donc de connaître l'adresse IP source, le numéro de session et toute information nécessaire au module de gestion de l'ESG pour localiser et ouvrir la session de manière à récupérer les données diffusées. Une fois la session ouverte, le module de diffusion 4 .21 commence sa lecture des données présentes sur le support et les fournit sous la forme de paquets IP à la couche IP du terminal. Le module de gestion d'ESG, via les couches FLUTE et UDP, peut alors récupérer ces paquets exactement de la même manière que s'ils provenaient du canal de diffusion. Le fragment d'ESG est donc rendu disponible à la couche applicative de manière totalement similaire à une diffusion classique. Cette notification est envoyée sur l'adresse IP et son port de destination qui sont référencés soit par l'ESG reçu depuis le canal de distribution unidirectionnel, soit depuis un ESG reçu par le canal de distribution dit interactif principal (3G), ou soit par la déclaration d'une adresse et d'un port fixe.

On peut également prévoir des réémissions conformes aux réémissions prévues par le protocole FLUTE permettant un envoi multiple des objets de session, ici les fragments d'ESG. Cette réémission permet de récupérer des paquets potentiellement non reçus (dépassement des buffers mémoires).

Dans le cas où le support de diffusion est de petite taille, typiquement le cas des marqueurs RFID, il est possible de tirer parti du mécanisme d'erreur dont dispose le gestionnaire d'ESG pour organiser une diffusion combinée entre le support de stockage et le canal interactif. En effet, dans ce cas, des fragments d'ESG ne pouvant pas être stockés sur le support de stockage du fait de leur taille, peuvent tout de même être référencés comme faisant partie du fragment diffusé. Dans ce cas, ils seront perçus comme n'ayant pas été reçus du fait d'une erreur de diffusion entrainant de ce fait une tentative de téléchargement via le protocole HTTP par le mécanisme de récupération d'erreur. Il est donc possible de fournir par ce biais des fragments d'ESG dépassant les capacités du support de stockage en prévoyant la présence des fragments manquants via le serveur de récupération.

Dans un premier mode, la session FLUTE d'acquisition périphérique est ouverte de manière permanente. Toutes les sessions décrites par l'ESG sur les services périphériques seront ouvertes pendant la phase de démarrage du terminal. Ce principe favorise la résolution de paramétrage des adresses IP dites locales. Il permet de recevoir sans attendre les données des périphériques. Dans un autre temps, la résolution d'adressage, en fait les ports, puisque la source et le destinataire sont connus, se fait de manière dynamique. A chaque envoi d'une notification, le proxy donne un numéro de port disponible pour chaque pilote ayant un périphérique de stockage associé et la notification met à jour le ou les fragments de l'ESG d'acquisition qui permettent de retrouver la ou les adresses et le ou les numéros de port. Il est à noter qu'un même pilote peut avoir plusieurs périphériques de stockage du même type associé (par exemple un réseau Bluetooth, ou un réseau USB). Il peut également indiquer à l'ESG de service la présence des périphériques.

Dans un mode particulier de réalisation de l'invention, le module de diffusion FLUTE fonctionne à la manière d'un carrousel interne au terminal. Dans ce mode, le module continue de diffuser les paquets contenus sur son périphérique de stockage jusqu'à ce qu'il reçoive du module FLUTE 4.19 ou du module de gestion d'ESG 4.22 une notification indiquant que tous les paquets ont bien été reçus. Ce mode de réalisation est particulièrement intéressant dans le cas où l'espace mémoire disponible pour la gestion du protocole FLUTE par le module 4,19 est limité et où ce module est amené à éliminer des paquets par manque de mémoire. Cela se produira lorsque, par exemple, de nombreux paquets seront simultanément reçus par le terminal en provenance du canal de diffusion, du ou des canaux interactifs et du ou des périphériques. De cette manière, les paquets sont réémis par le carrousel jusqu'à ce que l'intégralité des données ait pu être lue. Le module FLUTE 4.19 fait appel soit au canal interactif, soit émet une nouvelle demande de diffusion pour les paquets manquants. Il est donc possible de ne réémettre que les paquets manquants et non l'ensemble des données.

Quand des données émises par le module de diffusion FLUTE 4.21 sont manquées par le module FLUTE 4.19, celui-ci émet une requête HTTP de récupération desdits paquets. Cette requête peut être émise à destination du terminal lui-même, et non plus à destination d'un serveur de récupération de données, en utilisant un port défini par le terminal. Dans ce cas, le module FLUTE 4.19 interprète cette requête et renvoie les paquets manquants et seulement ceux-là.

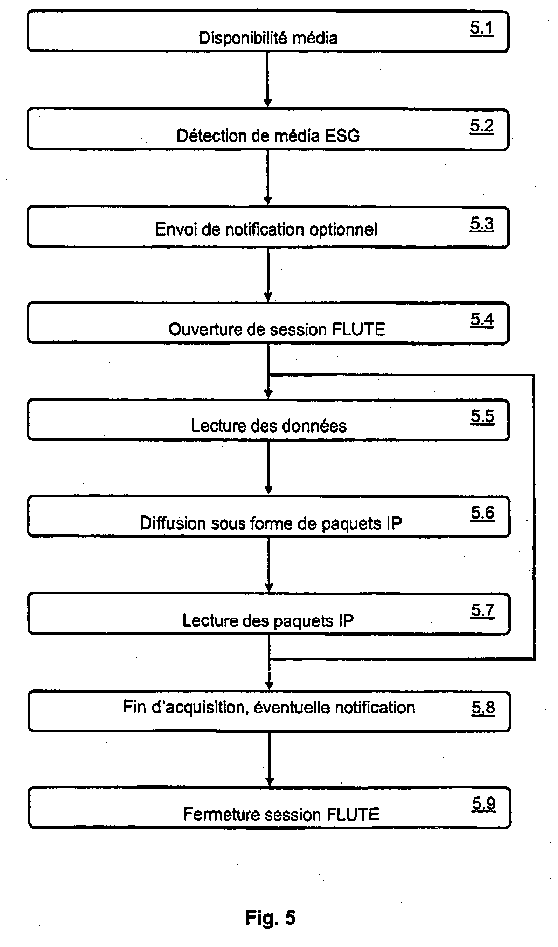

La Fig. 5 illustre le fonctionnement de l'exemple de réalisation de l'invention lors d'une utilisation d'un support de stockage constitué d'une carte mémoire. Lors d'une première étape 5.1, la carte mémoire est insérée dans le terminal. Le pilote détecte alors qu'il s'agit d'une carte mémoire contenant un fragment d'ESG pour une diffusion lors de l'étape 5.2. Le module, si nécessaire et suivant le mode de gestion d'adressage IP, génère à partir de données lues sur la carte une notification à destination du module de gestion d'ESG contenant les données pertinentes pour l'identification de la diffusion, adresse IP, numéro de session etc. Sur réception de cette notification et si la session n'est pas encore ouverte, le module de gestion d'ESG ouvre la session FLUTE lors d'une étape 5.4. Il s'ensuit une étape de lecture des données contenues sur le support de stockage lors d'une étape 5.5. Le module de diffusion commence alors la diffusion des paquets IP contenant le fragment d'ESG encapsulé dans une session FLUTE correspondante. Ces paquets sont lus sur le support et fournis à la couche IP. C'est l'étape 5.6. Le module de gestion d'ESG récupère ces paquets via les couches UDP et FLUTE lors de l'étape 5.7. Ces étapes 5.5 à 5.7 peuvent être effectuées plusieurs fois, dans le cas d'une émission en carrousel, où dans le cas d'une réémission totale ou partielle des données lorsque certains paquets ont du être ignorés, par exemple en cas de saturation des tampons de la couche IP. Optionnellement, une notification est envoyée dans une étape 5.8 afin d'informer le module de traitement d'ESG ou du ou des services de la fin d'envoi des données (lecture complète des données) ou que le périphérique ponctuellement attaché n'est plus présent. La session FLUTE est alors fermée dans une étape 5.9 quand tous les paquets ont été émis et reçus par le module FLUTE 4.19, ou quand lesdits périphériques ne sont plus reconnus par les drivers et donc par le terminal ou encore quand le temps de session imparti pour un type de périphérique arrive à échéance. Ces définitions peuvent être disponibles depuis soit les données stockées dans le support de stockage, soit les données définies par le pilote de périphérique, soit par la description d'acquisition contenue dans l'ESG.

Dans le cas d'un lecteur RFID, on peut implémenter une double lecture du marqueur. Lors du premier passage du marqueur, le lecteur récupère l'information permettant de générer la notification, il la génère. Ensuite, un deuxième passage du marqueur permet la lecture des données elles-mêmes en vue de leur diffusion. Dans le cas où ces données sont incomplètes, il s'ensuivra une requête en récupération des parties manquantes via le protocole de récupération utilisant HTTP sur le canal interactif

L'invention peut se généraliser à tout type de périphériques donnant accès à des moyens de stockage ou permettant la communication avec de tels moyens. Elle permet de fournir facilement, à un terminal DVB-H, des compléments de guide de services visant des services accessibles, par exemple localement, ou conditionnés à l'achat du support de stockage idoine. Il sera compris par l'homme du métier que l'invention peut également s'appliquer à tout type de réseau dit DVB transportant des données de type IP dans un mode de diffusion, et que le protocole utilisé pour cette diffusion est spécifiquement FLUTE ou tout autre protocole d'envoi des données comme par exemple RTP (« Real Time Protocol » en anglais).

Il est évident que l'invention décrite ici dans le cadre de la diffusion de données de guide électronique des services peut également servir à la diffusion de tout type de données pouvant être diffusées via un protocole de diffusion basé sur IP.

## Revendications

1. Procédé de diffusion de données au sein d'un terminal de communication, ledit terminal étant apte à recevoir des données selon un protocole de diffusion de données par session (4.19), ledit protocole de diffusion de données par session (4.19) étant implémenté sur un protocole de transport des données par paquets (4.16), ledit protocole de transport de données par paquets (4.16) permettant la réception de paquets de données reçus par un canal de diffusion de données (4.2), comportant les étapes suivantes :
- (a) une étape (5.4) d'ouverture de session par le terminal en vue de recevoir des donnés diffusées selon ledit protocole de diffusion de données par session (4.19),
- (b) une étape (5.7) de lecture, par le terminal, des données diffusées via le protocole de diffusion de données par session (4.19) via la session ouverte,
**caractérisé en ce qu'**il comporte en outre les étapes suivantes :
- (c) une étape (5.1) de fourniture de données à diffuser stockées sous la forme de données selon ledit format de diffusion par session sur un moyen de stockage accessible au terminal,
- (d) une étape (5.5) de lecture, par un module spécifique, des données sur le moyen de stockage;
- (e) une étape (5.6) de fourniture, par ledit module spécifique, desdites données lues sur le support de stockage, au protocole de transport, sous la forme de paquets de données conformes au protocole de diffusion par session et correspondant à la session ouverte.

2. Procédé selon la revendication 1 comportant en outre une étape d'envoi d'une notification contenant les informations permettant au terminal de connaître les paramètres permettant au moins l'ouverture d'une session correspondant aux données stockées sur le moyen de stockage.

3. Procédé selon la revendication 1 où les informations permettant au terminal de connaître les paramètres permettant l'ouverture de la session correspondant aux données stockées sur le moyen de stockage sont reçues via le canal de diffusion.

4. Procédé selon la revendication 1 où les étapes (c), (d) et (e) peuvent être répétées dans un mode dit de carrousel.

5. Procédé selon l'une quelconque des revendications 1 à 4 où les données stockées sont des fragments de services de type guide électronique ou service de notification, ou encore des métadonnées audio/vidéo.

6. Procédé selon l'une des revendications 1 à 5 comportant en outre une étape d'envoi d'une notification de fin d'acquisition quand tous les paquets ont été émis.

7. Terminal de communication comprenant :
- un canal de diffusion (4.2),
- un protocole de transport de données par paquets (4.16) permettant la réception de paquets de données reçus par ledit canal de diffusion de données (4.2),
- un protocole de diffusion de données par session (4.19) implémenté sur ledit protocole de transport des données par paquets (4.16),
- des moyens de réception de données selon ledit protocole de diffusion de données par session (4.19),
- des moyens d'ouverture de session par le terminal en vue de recevoir des données diffusées selon ledit protocole de diffusion de données par session (4.19),
**caractérisé en ce qu'**il comprend en outre :
- des moyens d'accéder à des données à diffuser stockées sous la forme de données selon ledit format de diffusion par session sur un moyen de stockage,
- des moyens de lecture, par un module spécifique, des données sur le moyen de stockage,
- des moyens de fourniture, par ledit module spécifique, desdites données lues sur le support de stockage, au protocole de transport, sous la forme de paquets de données conformes au protocole de diffusion par session.

8. Moyen de stockage pouvant être rendu accessible à un terminal de communication selon la revendication 6 **caractérisé en ce qu'**il comprend des données sous la forme de paquets de données conformes au protocole de diffusion par session.

## Claims

1. Method for distributing data within a communication terminal, the said terminal being capable of receiving data in accordance with a data distribution session protocol (4.19), the said data distribution session protocol (4.19) being implemented on a data packet transport protocol (4.16), the said data packet transport protocol (4.16) providing for the reception of data packets received by a data distribution channel (4.2), comprising the following stages:
- (a) a stage (5.4) in which the terminal opens a session with a view to receiving data distributed in accordance with the said data distribution session protocol (4.19)
- (b) a stage (5.7) in which the terminal reads the data distributed via the data distribution session protocol (4.19) via the open session
**characterized in that** it also comprises the following stages:
- (c) a stage (5.1) in which data to be distributed are supplied, stored in the form of data in accordance with the said distribution session format on storage means accessible to the terminal
- (d) a stage (5.5) in which data are read by a specific module on the storage means
- (e) a stage (5.6) in which the said data read on the storage means are supplied by the said specific module to the transport protocol in the form data packets conforming with the distribution session protocol and corresponding to the open session

2. Method according to claim 1 also comprising a stage in which a notification is sent, containing information allowing the terminal to be aware of the parameters providing for at least the opening of a session corresponding to the data stored on the storage means.

3. Method according to claim 1 where the information allowing the terminal to be aware of the parameters providing for the opening of a session corresponding to the data stored on the storage means is received via the distribution channel.

4. Method according to claim 1 where stages (c), (d) and (e) can be repeated in a mode known as carrousel.

5. Method according to any one of claims 1 to 4 where the data stored are fragments of services of the electronic guide or notification service type, or even audio/video metadata.

6. Method according to one of claims 1 to 5 also comprising a stage in which a notification of end of acquisition is sent when all the packets have been sent.

7. Communication terminal comprising:
- a distribution channel (4.2)
- a data packet transport protocol (4.16) providing for the reception of data packets received by the said data distribution channel (4.2)
- a data distribution session protocol (4.19) implemented on the said data packet transport protocol (4.16)
- means for receiving data in accordance with the said data distribution session protocol (4.19)
- means for the terminal to open a session with a view to receiving data distributed in accordance with the said data distribution session protocol (4.19)
**characterised in that** it also comprises:
- means for accessing data to be distributed stored in the form of data in accordance with the said distribution session format on storage means
- means for a specific module to read data on the storage means
- means for the said specific module to supply the said data read on the storage medium to the transport protocol in the form of data packets conforming with the distribution session protocol

8. Storage means which can be made accessible to a communication terminal according to claim 6 **characterised in that** they comprise data in the form of data packets conforming with the distribution session protocol.

## Patentansprüche

1. Verfahren zur Datenübertragung innerhalb eines Kommunikationsendgeräts, wobei das Endgerät geeignet ist, Daten gemäß einem sessionbasierten Datenübertragungsprotokoll (4.19) zu empfangen, wobei das sessionbasierte Datenübertragungsprotokoll (4.19) auf einem paketbasierten Datenübertragungsprotokoll (4.16) implementiert wird, wobei das paketbasierte Datenübertragungsprotokoll (4.16) den Empfang von Datenpaketen ermöglicht, die von einem Datenübertragungskanal (4.2) empfangen werden, wobei das Verfahren folgende Schritte aufweist:
- (a) einen Schritt (5.4) zum Eröffnen der Session durch das Endgerät, um gemäß dem sessionbasierten Datenübertragungsprotokoll (4.19) übertragene Daten zu empfangen,
- (b) einen Schritt (5.7) zum Lesen der über das sessionbasierte Datenübertragungsprotokoll (4.19) übertragenen Daten durch das Endgerät über die offene Session,
**dadurch gekennzeichnet, dass** es ferner folgende Schritte aufweist:
- (c) einen Schritt (5.1) zum Liefern von zu übertragenden Daten, die in Form von Daten gemäß dem sessionbasierten Übertragungsformat auf einem Speichermittel, das dem Endgerät zugänglich ist, gespeichert sind,
- (d) einen Schritt (5.5) zum Lesen der Daten auf dem Speichermittel durch ein spezifisches Modul;
- (e) einen Schritt (5.6) zum Liefern der auf dem Speicherträger gelesenen Daten durch das spezifische Modul an das Übertragungsprotokoll in Form von Datenpaketen gemäß dem sessionbasierten Übertragungsprotokoll und entsprechend der offenen Session.

2. Verfahren nach Anspruch 1, das weiterhin einen Schritt zum Senden einer Mitteilung, die die Informationen enthält, durch die das Endgerät die Parameter erkennen kann, die zumindest die Eröffnung einer Session ermöglicht, die den Daten entspricht, die auf dem Speichermittel gespeichert sind, aufweist.

3. Verfahren nach Anspruch 1, wobei die Informationen, durch die das Endgerät die Parameter erkennen kann, die die Eröffnung der Session ermöglichen, die den Daten entspricht, die auf dem Speichermittel gespeichert sind, über den Übertragungskanal empfangen werden.

4. Verfahren nach Anspruch 1, wobei die Schritte (c), (d) und (e) in einem sogenannten Karussell-Modus wiederholt werden können,

5. Verfahren nach einem der Ansprüche 1 bis 4, wobei die gespeicherten Daten Fragmente von Diensten der Art elektronischer Führer oder Mitteilungsdienst oder aber Audio-/Video-Metadaten sind.

6. Verfahren nach einem der Ansprüche 1 bis 5, das weiterhin einen Schritt zum Senden einer Mitteilung über die beendete Erfassung aufweist, wenn sämtliche Pakete gesendet wurden.

7. Kommunikationsendgerät, das folgendes aufweist:
- einen Übertragungskanal (4.2),
- ein paketbasiertes Datenübertragungsprotokoll (4.16), das den Empfang von über den Kanal zur Datenübertragung (4.2) empfangenen Datenpaketen ermöglicht,
- ein sessionbasiertes Datenübertragungsprotokoll (4.19), das auf dem paketbasierten Datenübertragungsprotokoll (4.16) implementiert ist,
- Mittel zum Empfangen von Daten gemäß dem sessionbasierten Datenübertragungsprotokoll (4.19),
- Mittel zur Eröffnen der Session durch das Endgerät, um die gemäß dem sessionbasierten Datenübertragungsprotokoll (4.19) übertragenen Daten zu empfangen,
**dadurch gekennzeichnet, dass** es weiterhin folgendes aufweist:
- Mittel, um auf zu übertragende Daten zuzugreifen, die in Form von Daten gemäß dem sessionbasierten Übertragungsformat auf dem Speichermittel gespeichert sind,
- Mittel zum Lesen der Daten auf dem Speichermittel durch ein spezifisches Modul,
- Mittel zum Liefern der auf dem Speicherträger gelesenen Daten durch das spezifische Modul an das Übertragungsprotokoll in Form von Datenpaketen gemäß dem sessionbasierten Übertragungsprotokoll.

8. Speichermittel, das einem Kommunikationsendgerät nach Anspruch 6 zugänglich gemacht werden kann, **dadurch gekennzeichnet, dass** es Daten in Form von Datenpaketen gemäß dem sessionbasierten Übertragungsprotokoll aufweist.
